# EUROPEAN PATENT APPLICATION

(11) **EP 4 407 775 A1**
(43) Date of publication of application: **31.07.2024**
(21) Application number: 22881355.6
(22) Date of filing: 12.10.2022
(51) Int. Cl.: H01M 50/451, H01M 50/446, H01M 50/463, H01M 50/489, H01M 50/417, H01M 10/04, H01M 10/058, H01M 50/531

(54) **SEPARATOR FOR ELECTROCHEMICAL DEVICE AND ELECTROCHEMICAL DEVICE COMPRISING SAME**

(30) Priority: 12.10.2021 KR 20210135328
(71) Applicant: LG Energy Solution, Ltd., Seoul 07335 (KR)
(72) Inventor: LEE, So-Yeong, Daejeon 34122 (KR); PARK, So-Jung, Daejeon 34122 (KR); BAE, Won-Sik, Daejeon 34122 (KR); LEE, Jong-Yoon, Daejeon 34122 (KR); JEONG, So-Mi, Daejeon 34122 (KR)
(74) Representative: Hoffmann Eitle
(86) International application number: PCT/KR2022/015438
(87) International publication number: WO 2023/063728

(57) **Abstract**

Disclosed is a separator including a separator substrate and an inorganic coating layer disposed on at least one surface of the substrate, wherein a concave pattern portion having a concave pattern is applied merely at the outer circumferential end of the separator substrate. The separator may show excellent resistance characteristics, while ensuring high binding force between the separator substate and the inorganic coating layer by virtue of such a structural feature. In addition, in the electrochemical device including the separator, the concave pattern portion at the outer circumferential end of the separator is disposed in such a manner that it may be overlapped with the tab portion of an electrode, when the separator is applied to an electrode assembly. In this manner, it is possible to prevent lithium plating.

## Description

### TECHNICAL FIELD

The present application claims priority to Korean Patent Application No. 10-2021-0135328 filed on October 12, 2021 in the Republic of Korea. The present disclosure relates to a separator for an electrochemical device which shows excellent binding force between a porous polymer substrate and an inorganic coating layer and excellent electrical resistance characteristics, and an electrochemical device including the same.

### BACKGROUND ART

Secondary batteries represented by lithium-ion secondary batteries have been used widely as power sources for portable electronic instruments, such as notebook computers, cellular phones, digital cameras, camcorders, or the like. In addition, recently, such batteries have been applied to various industrial fields, including automobiles, by virtue of their characteristics of high energy density.

Lithium secondary batteries have been spotlighted, since they have a higher operating voltage and significantly higher energy density as compared to conventional batteries, such as Ni-MH, Ni-Cd and sulfuric acid-lead batteries using an aqueous electrolyte. However, such lithium-ion batteries have a risk of ignition and explosion due to the use of an organic electrolyte, and are disadvantageous in that they require a complicated manufacturing process. More recently, lithium-ion polymer batteries improve such disadvantages of lithium-ion batteries and are regarded as one of the next-generation batteries. However, such lithium-ion polymer batteries still have a relatively lower capacity as compared to lithium-ion batteries, and particularly, show an insufficient discharge capacity at low temperature. Therefore, there is an imminent need for improvement of such disadvantages.

Evaluation and securement of safety of such electrochemical devices are very important. With regard to safety characteristics of electrochemical devices, there is great concern about explosion when an electrochemical device is overheated to cause thermal runaway or perforation of a separator. Particularly, a polyolefin-based porous substrate used conventionally as a separator for an electrochemical device shows a severe heat shrinking behavior at a temperature of 100°C or higher due to its material property and a characteristic during its manufacturing process, including orientation, thereby causing a short-circuit between a positive electrode and a negative electrode.

To solve the above-mentioned safety problems of an electrochemical device, there has been suggested a separator having a porous inorganic coating layer formed by applying a mixture of an excessive amount of inorganic particles with a binder polymer onto at least one surface of a separator substrate having a plurality of pores. However, it is required to incorporate a polymer resin as a binder into the inorganic coating layer in order to fix the inorganic particles in the inorganic coating layer and to provide interlayer binding force between the separator and an electrode. Herein, when the amount of the polymer resin is increased, binding force is improved, but the interfacial resistance is decreased undesirably. On the contrary, when the amount of the polymer resin is reduced, the inorganic particles are separated to cause degradation of durability, and the separator cannot be in close contact with an electrode to cause the problem of an increase in resistance. Therefore, there is a need for developing a separator capable of ensuring both resistance characteristics and binding force.

### DISCLOSURE

### Technical Problem

The present disclosure is designed to solve the problems of the related art, and therefore the present disclosure is directed to providing a separator for an electrochemical device which ensures heat resistance and stability and durability and shows excellent resistance characteristics at the same time, and an electrochemical device including the separator. It will be easily understood that the objects and advantages of the present disclosure may be realized by the means shown in the appended claims and combinations thereof.

### Technical Solution

According to the first embodiment of the present disclosure, there is provided a separator for an electrochemical device, including a separator substrate and an inorganic coating layer formed on the surface of the separator substrate, wherein the separator substrate has a porous structure and includes a polymer material, the inorganic coating layer includes inorganic particles and a binder material, the surface of the separator substrate has a concave pattern portion having a predetermined width inwardly from the outer circumferential end in all regions or in at least a partial region of the outer circumferential portion, and the concave pattern portion has indentations dented from the surface.

According to the second embodiment of the present disclosure, there is provided the separator for an electrochemical device as defined in the first embodiment, wherein the concave pattern portion has indentations dented inwardly from one surface of the separator substrate based on a thickness direction, and shows a surface roughness (Ra) of 0.8-3.2.

According to the third embodiment of the present disclosure, there is provided the separator for an electrochemical device as defined in the first or the second embodiment, wherein the inorganic coating layer has a concave pattern corresponding to the concave pattern portion of the separator substrate at a position corresponding to the concave pattern portion of the separator substrate, and the concave pattern portion of the separator substrate and the concave pattern of the inorganic coating layer are engaged with each other.

According to the fourth embodiment of the present disclosure, there is provided the separator for an electrochemical device as defined in the third embodiment, which has a constant total thickness, and the concave pattern of the inorganic coating layer and the concave pattern of the separator substrate are engaged with each other at the boundary where the inorganic coating layer faces the separator substrate.

According to the fifth embodiment of the present disclosure, there is provided the separator for an electrochemical device as defined in any one of the first to the fourth embodiments, wherein the concave pattern portion has an area corresponding to 5-40% based on 100% of the area of the separator substrate.

According to the sixth embodiment of the present disclosure, there is provided the separator for an electrochemical device as defined in any one of the first to the fifth embodiments, wherein the concave pattern portion has indentations dented inwardly from one surface of the separator substrate based on a thickness direction, and the indentations have a plane area corresponding to 20-80% based on the total area of the concave pattern portion.

According to the seventh embodiment of the present disclosure, there is provided the separator for an electrochemical device as defined in any one of the first to the sixth embodiments, wherein the concave pattern portion shows an area corresponding to 5-40% based on 100% of the area of the separator substrate and has indentations dented inwardly from one surface of the separator substrate based on a thickness direction, and the indentations have a plane area corresponding to 20-80% based on the total area of the concave pattern portion.

According to the eighth embodiment of the present disclosure, there is provided the separator for an electrochemical device as defined in any one of the first to the seventh embodiments, wherein the separator substrate shows a plane area of the indentations corresponding to 20-80% based on the total area of the concave pattern portion, and the concave pattern portion has a surface roughness (Ra) of 0.8-3.2.

According to the ninth embodiment of the present disclosure, there is provided the separator for an electrochemical device as defined in any one of the first to the eighth embodiments, wherein the separator substrate is a porous sheet including a polyolefin.

According to the tenth embodiment of the present disclosure, there is provided the separator for an electrochemical device as defined in any one of the first to the ninth embodiments, wherein the inorganic particles include at least one selected from the group consisting of BaTiO₃, Pb(Zr,Ti)O₃ (PZT), Pb₁₋ₓLaₓZr_{1-y}Ti_{y}O₃ (PLZT, 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH) ₃, SiC and TiO₂.

According to the eleventh embodiment of the present disclosure, there is provided an electrode assembly including a negative electrode, a separator and a positive electrode, wherein the separator is the same as defined in any one of the first to the tenth embodiments, the negative electrode includes a current collector, an electrode active material layer formed on at least one surface of the current collector and a negative electrode tab extended from the current collector and protruding out from the negative electrode, and the separator and the negative electrode are stacked in such a manner that the concave pattern portion of the separator is totally or at least partially overlapped with the negative electrode tab.

According to the twelfth embodiment of the present disclosure, there is provided the electrode assembly as defined in the eleventh embodiment, wherein the electrode active material layer of the negative electrode has an inclined surface at a total or at least a part of the end thereof, and the separator and the negative electrode are stacked in such a manner that the concave pattern portion of the separator is totally or at least partially overlapped with the inclined surface.

### Advantageous Effects

The separator according to the present disclosure includes a separator substrate and an inorganic coating layer disposed on at least one surface of the separator substrate, wherein a concave pattern portion having a concave pattern is applied merely at the outer circumferential end of the separator substrate. The separator according to the present disclosure may show excellent resistance characteristics, while ensuring high binding force between the separator substate and the inorganic coating layer by virtue of the above-mentioned structural feature. In addition, in the electrochemical device including the separator according to the present disclosure, the concave pattern portion at the outer circumferential end of the separator is disposed in such a manner that it may be overlapped with the tab portion of an electrode, when the separator is applied to an electrode assembly. In this manner, it is possible to prevent lithium plating.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic sectional view illustrating the separator according to an embodiment of the present disclosure.
FIG. 2 is a schematic view illustrating the surface of the separator substrate of the separator according to an embodiment of the present disclosure.
FIG. 3 is a schematic sectional view illustrating the electrode assembly according to the related art.
FIG. 4 is a schematic sectional view illustrating the electrode assembly according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression `a part includes an element' does not preclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression `A and/or B' means `A, B or both of them'.

Specific terms used in the following description are for illustrative purposes and are not limiting. Such terms as 'right', 'left', 'top surface' and `bottom surface' show the directions in the drawings to which they are referred. Such terms as 'inwardly' and 'outwardly' show the direction toward the geometrical center of the corresponding apparatus, system and members thereof and the direction away from the same, respectively. 'Front', `rear', 'top' and 'bottom' and related words and expressions show the positions and points in the drawings to which they are referred and should not be limiting. Such terms include the above-listed words, derivatives thereof and words having similar meanings.

The present disclosure relates to a separator for an electrochemical device and an electrochemical device including the same. Herein, the term `electrochemical device' refers to a device which converts chemical energy into electrical energy through electrochemical reactions, and has a concept covering a primary battery and a secondary battery. The secondary battery is a rechargeable battery and includes a lithium-ion battery, a nickel-cadmium battery, a nickel-metal hydride battery, or the like.

### 1. Separator

### 1) Structure of Separator

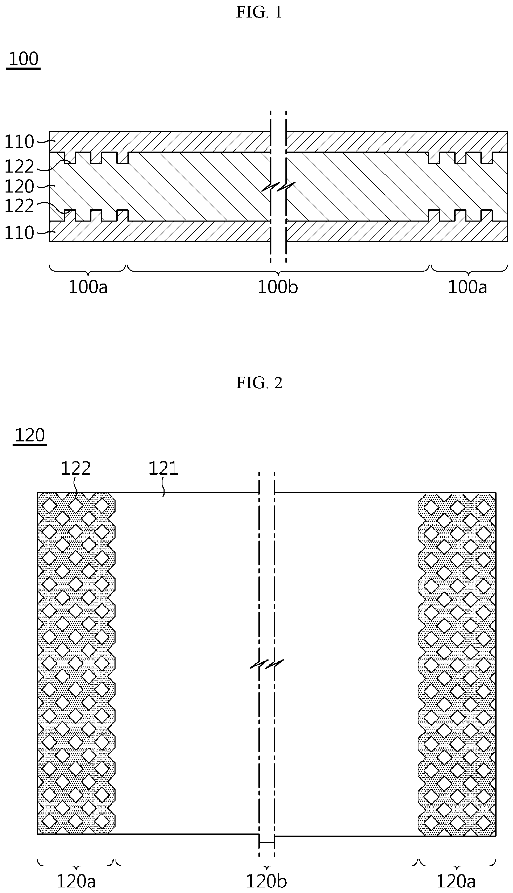

According to the present disclosure, the separator includes a porous separator substrate including a plurality of pores, and an inorganic coating layer formed on at least one surface of the separator substrate. FIG. 1 is a schematic sectional view illustrating the separator 100 according to an embodiment of the present disclosure. In addition, FIG. 2 is a schematic plan view illustrating a separator substrate 120. Referring to FIGS. 1 and 2, the separator substrate 120 has a concave pattern portion 120a having a predetermined width and disposed at the outer circumferential end of at least one surface. The inorganic coating layer 110 is disposed on at least one surface of the separator substrate, preferably in such a manner that it may totally cover the surface of the separator substrate, and the concave pattern portion 120a is embedded by the formation of the inorganic coating layer. As a result, any pattern corresponding to the concave pattern portion cannot be identified from the outside of the separator coated with the inorganic coating layer, and the separator shows a flat surface.

### 2) Separator Substrate

The separator substrate refers to a substrate which functions as an ion-conducting barrier that allows ions to pass therethrough, while interrupting an electrical contact between a negative electrode and a positive electrode, and has a sheet-like shape including a plurality of pores formed therein. The pores are interconnected so that gases or liquids may pass from one surface of the substrate to the other surface of the substrate.

The materials forming the separator substrate may include any organic materials or inorganic materials having electrical insulating properties. Particularly, a thermoplastic resin may be used preferably as a material forming the substrate with a view to imparting a shutdown function. Herein, the term `shutdown function' refers to a function of melting of the thermoplastic resin to close the pores of the separator substrate when the temperature of a battery is increased, thereby interrupting migration of ions and preventing the thermal runaway of a battery. The thermoplastic resin suitably includes a thermoplastic resin having a melting point of less than about 200°C, a polyolefin being particularly preferred.

In addition, the thermoplastic resin may further include at least one selected from polymer resins including polyethylene terephthalate, polybutylene terephthalate, polyacetal, polyamide, polycarbonate, polyimide, polyetherether ketone, polyether sulfone, polyphenylene oxide, polyphenylene sulfide, and polyethylene naphthalate. The separator substrate may include a non-woven fabric or a porous polymer film or a laminate of two or more layers thereof, but is not particularly limited thereto.

Particularly, the porous polymer substrate may be a porous film and may be any one of the following a) to e):
a) A porous film formed by melting/extruding a polymer resin;
b) A multilayer film formed by stacking two or more layers of the porous films of a);
c) A non-woven fabric formed by integrating filaments obtained by melting/spinning a polymer resin;
d) A multilayer film formed by stacking two or more layers of the non-woven fabrics of c); and
e) A multilayered porous film including two or more of a) to d).

According to the present disclosure, the separator substrate may have a thickness of 4-15 µm, preferably. When the thickness of the separator substrate is less than the above-defined range, it is not possible to obtain a sufficient function as a conducting barrier. On the other hand, when the thickness exceeds the above-defined range (i.e. when the separator substrate is excessively thick), the separator may show excessively increased resistance.

According to an embodiment of the present disclosure, the polyolefin may have a weight average molecular weight of 100,000-5,000,000. When the weight average molecular weight is less than 100,000, it is difficult to ensure sufficient mechanical properties. On the other hand, when the weight average molecular weight is larger than 5,000,000, shut-down characteristics may be degraded or molding may not be carried out with ease. In addition, the separator substrate may have a puncture strength of 300 g or more with a view to improvement of the production yield. The puncture strength of the separator substrate refers to the maximum puncture load (g) determined by carrying out a puncture test with a handy compression tester, Kato tech KES-G5, under the conditions of a needle tip radius of curvature of 0.5 mm and a puncture rate of 2 mm/sec.

According to an embodiment of the present disclosure, the separator substrate may be any planar porous polymer substrate, as long as it is one for an electrochemical device. For example, the separator substrate may be an insulating thin film showing high ion permeability and mechanical strength and generally having a pore diameter of 0.01-0.10 µm and a thickness of 3-20 µm or 4-15 µm. Meanwhile, according to an embodiment of the present disclosure, the separator substrate preferably has a porosity of 30-70%.

Particularly, according to the present disclosure, the separator substrate has a concave pattern portion 120a having a predetermined width inwardly from the outermost end at the outer circumferential portion of the surface. The concave pattern portion may be formed totally or partially at the outer circumference. According to an embodiment of the present disclosure, when the separator substrate has a rectangular shape, the concave pattern portion may be formed in at least one edge of the four edges of the rectangle. For example, concave pattern portions may be formed at two edges facing each other. Referring to FIGS. 1 and 2, a concave pattern portion 120a is formed at the outer circumferential portion of the separator substrate 120. According to an embodiment of the present disclosure, the concave pattern portion may have a plane area corresponding to 5-40% of the plane area of the separator substrate. According to an embodiment of the present disclosure, the concave pattern portion may be formed by pressurizing the corresponding portion of the separator substrate by using a patterned pressurizing instrument before forming the inorganic coating layer. When the concave pattern portion is formed as mentioned above, the surface area of the corresponding portion is increased, and thus the binding area with the inorganic coating layer is increased, resulting in improvement of the adhesion between the separator substrate and the inorganic coating layer. In addition, the concave pattern portion realizes an anchoring effect of fixing the inorganic coating layer and the separator substrate to each other, and thus the effect of improving the binding force may be enhanced. Thus, it is possible to prevent separation of the inorganic coating layer from the separator substrate by increasing the binding force between the inorganic coating layer and the separator substrate at the outer circumferential end portion of the separator. In addition, since no change in outer shape of the porous substrate occurs inside of the separator, it is possible to maintain originally designed target porosity or pore size.

According to an embodiment of the present disclosure, the concave pattern portion may be formed by using a metallic net. For example, a metallic net may be disposed in a part of a separator substrate where a concave pattern portion is to be formed, and the metallic net and the separator substrate may be pressurized together to form a concave pattern portion. The shape of the concave pattern portion formed in the separator substrate corresponds to the shape of the metallic net used herein. The metallic net is not limited to any particular ingredient or shape, as long as it pressurizes the surface of the separator substrate to transfer the shape corresponding to the shape of the metallic net to the separator substrate. For example, the metallic net may be a mesh made of stainless steel (SUS). Meanwhile, according to the present disclosure, the concave pattern portion may be formed to have indentations 122 dented inwardly from the surface of the separator substrate. According to an embodiment of the present disclosure, when such a concave pattern portion is formed, the separator substrate may have a surface roughness (Ra) of 0.8-3.2, preferably 1.0-2.0.

According to an embodiment of the present disclosure, the plane area of the indentations 122 in the plane area of the separator substrate may be 20-80%, preferably 30-70%, based on the total plane area of the concave pattern portion. Herein, `plane area of the indentations' means the ratio of the total area (extent) of only the indentations formed in the corresponding surface based on the total area (extent) of the corresponding surface based on the concave pattern portion. In addition, the shape of the indentations in the concave pattern portion is not particularly limited, but may have a regular dimension, size and arrangement preferably. In other words, when forming the concave pattern portion, the indentations are not locally concentrated but are distributed uniformly throughout the concave pattern portion, preferably. Meanwhile, according to an embodiment of the present disclosure, the concave pattern may have a linear shape, lattice-like shape, dot-like shape, or the like, but is not limited thereto. Meanwhile, drawing numerals 121 and 120b in FIG. 2 represent a part where no concave pattern portion is formed and a flat surface is retained.

Meanwhile, the separator according to the present disclosure has an inorganic coating layer 110, including inorganic particles and a binder material, on at least one surface of the separator substrate and shows a porous structure derived from the pores resulting from the interstitial volumes among the inorganic particles. The pores may be controlled in terms of pore size and porosity (pore volume ratio) depending on the particle size and the particle size distribution. Such a structure enhances the resistance against metallic foreign materials present in an electrode and inhibits shrinking of the polyolefin separator as a substrate, thereby providing a lithium secondary battery with reinforced safety. In this context, the inorganic coating layer may include inorganic particles in an amount of 70-99.5 wt%, preferably 80-99 wt%, based on 100 wt% of the inorganic coating layer.

Meanwhile, the indentations, i.e. the dented portions of the concave pattern portion do not remain as a vacant space but are filled with the inorganic coating layer. Referring to FIG. 1, it can be seen that the indentations 122 of the concave pattern portion of the separator substrate are filed with the inorganic coating layer. As described hereinafter, the separator may be obtained by applying a slurry for forming an inorganic coating layer to the surface of the separator substrate, followed by drying, wherein the slurry is introduced to the dented portions of the separator substrate so that the dented portions may be filled with the inorganic coating layer. As such, the separator substrate and the inorganic coating layer are engaged with each other by the concave patterns corresponding to each other at the end portion of the separator. As a result, even when the separator substrate undergoes shrinking, the end portion is fixed by the inorganic coating layer to minimize deformation of the separator substrate. In FIG. 1, drawing numeral 100a represents a part of the separator where the separator substrate and the inorganic coating layer are engaged with each other by the concave patterns corresponding to each other, and drawing numeral 100b represents the remaining part.

According to an embodiment of the present disclosure, there is no particular limitation in the inorganic particles, as long as they are electrochemically stable. In other words, there is no particular limitation in the inorganic particles, as long as they cause no oxidation and/or reduction in the range (e.g. 0-5 V based on Li/Li⁺) of operating voltage of an applicable electrochemical device. Particularly, when using inorganic particles having a high dielectric constant as inorganic particles, it is possible to improve the ion conductivity of an electrolyte by increasing the dissociation degree of an electrolyte salt, such as a lithium salt, in the electrolyte.

For the above-mentioned reasons, the inorganic particles preferably include high-dielectric constant inorganic particles having a dielectric constant of 5 or more, preferably 10 or more. Non-limiting examples of the inorganic particles having a dielectric constant of 5 or more include at least one selected from BaTiO₃, Pb(Zr,Ti)O₃ (PZT), Pb₁₋ₓLaₓZr_{1-y}Ti_{y}O₃ (PLZT, 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH) ₃, SiC and TiO₂.

According to the present disclosure, the binder material may include an acrylic polymer and/or PVDF-based polymer. For example, the acrylic polymer may include a (meth)acrylic polymer. The (meth)acrylic polymer includes (meth)acrylate as a monomer. In addition, particular examples of the monomer may include butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-octyl (meth)acrylate, isooctyl (meth)acrylate, isononyl (meth)acrylate, lauryl (meth)acrylate, tetradecyl (meth)acrylate, or the like, and at least one of such monomers may be used. The PVDF-based polymer may include at least one selected from homopolymer of vinylidene fluoride (i.e. polyvinylidene fluoride), a copolymer of vinylidene fluoride with a copolymerizable monomer, and a mixture thereof. According to an embodiment, particular examples of the monomer include fluorinated monomers and/or chlorinated monomers. Non-limiting examples of the fluorinated monomers may include at least one selected from: vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether, such as perfluoro(methylvinyl)ether (PMVE), perfluoro(ethylvinyl)ether (PEVE) or perfluoro(propylvinyl)ether (PPVE); perfluoro(1,3-dioxole); perfluoro(2,2-dimethyl-1,3-dioxole) (PDD); or the like, and at least one of such fluorinated monomers may be used. According to an embodiment of the present disclosure, the PVDF-based polymer may include at least one selected from polyvinylidene fluoride (PVDF), polyvinylidene fluoride-co-hexafluoropropylene (PVDF-HFP), polyvinylidene fluoride-co-chlorotrifluoroethylene (PVDF-CTFE), polyvinylidene fluoride-co-tetrafluoroethylene (PVDF-TFE) and polyvinylidene fluoride-co-trifluoroethylene (PVDF-TrFE).

In addition, although there is no particular limitation in the average particle diameter (D₅₀) of the inorganic particles, the inorganic particles preferably have an average particle diameter of 0.1-2.5 µm in order to form an inorganic coating layer having a uniform thickness and to provide an adequate level of porosity.

The inorganic coating layer may have a pore size of approximately 50-500 nm based on the longest pore diameter, but is not limited thereto.

### 2. Method for Manufacturing Separator

The separator according to the present disclosure may be obtained by pressurizing the outer circumferential end portion of a separator substrate with a pressurizing member to form a concave pattern portion (S1), and coating an inorganic coating layer on at least one surface of the separator substrate (S2).

First, a separator substrate is prepared, and a concave pattern portion is formed at the outer circumferential end thereof (S1). The concave pattern portion may be formed by preparing a pressurizing member having a concave pattern formed thereon and pressing the outer circumferential end portion of the separator substrate by using the pressurizing member. For example, the pressurizing member having a concave pattern may include a flat planar jig, a pressurizing roller, or the like, but is not limited thereto. In other words, any pressurizing member may be used with no particular limitation, as long as it pressurizes the surface of a porous polymer sheet to form an irreversible concave pattern on the surface thereof.

Then, an inorganic coating layer is coated on the surface having the concave pattern portion in the separator substrate (S2). First, a polymer resin as a binder material is dispersed or dissolved in a solvent to prepare a binder solution. Next, inorganic particles dispersed in the form of bead mill are introduced to the binder solution to prepare a slurry for forming an inorganic coating layer. Non-limiting examples of the solvent may be any one selected from the group consisting of water, acetone, tetrahydrofuran, methylene chloride, chloroform, dimethyl formamide, N-methyl-2-pyrrolidone (NMP) and cyclohexane, or a mixture of two or more of them.

The method for coating the slurry on the separator substrate may be any conventional coating method known to those skilled in the art, and particular examples of the method include dip coating, die coating, roll coating, comma coating, or a combination thereof. In addition, the drying may be carried out through a conventional process, such as natural drying or air blowing drying, with no particular limitation.

### 3. Electrode Assembly Including Separator

Meanwhile, the present disclosure provides a secondary battery including the above-described separator. The battery includes a negative electrode, a positive electrode and a separator interposed between the negative electrode and the positive electrode, wherein the separator has the above-described characteristics.

According to an embodiment of the present disclosure, the separator may be disposed in the electrode assembly in such a manner that the concave pattern portion may totally or at least partially face an electrode tab. For example, in the plan view of the electrode assembly, the separator may be disposed in such a manner that the concave pattern portion of the separator may be totally or at least partially overlapped with an electrode tab. Meanwhile, the electrode tab may be a negative electrode tab, preferably.

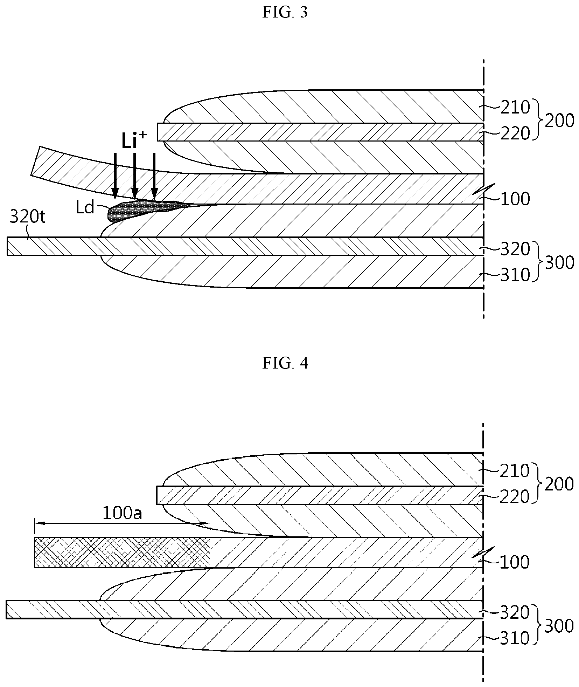

FIG. 3 is a schematic sectional view illustrating the electrode assembly according to the related art. Referring to FIG. 3, the electrode assembly includes a positive electrode 200, a negative electrode 300 and a separator 100. The positive electrode includes a positive electrode active material layer 210 formed on both surfaces of a positive electrode current collector 220, and the negative electrode includes a negative electrode active material layer 310 formed on both surfaces of a negative electrode current collector 320. In the electrode assembly, the electrode active material layer may have an inclined surface A, while not showing a right angle at the end thereof. Such an inclined surface may be formed intentionally in designing the electrode or may be a feature appearing inevitably during the process for manufacturing the electrode. For example, when forming the electrode active material layer by applying a flowable electrode slurry to the current collector, the slurry flows down at the end portion of the electrode, and thus an inclined surface may be formed since the end cannot maintain a right angle. Meanwhile, the electrode and the separator cannot be in close contact with each other at their end portions due to the inclined surface, thereby forming a gap, which may cause separation between the electrode and the separator. Particularly, formation of lithium plating may become severe due to an increase in interfacial resistance between the electrode and the separator, caused by such a gap, at the end portion of the negative electrode. In addition, when the separator substrate is not in close contact with the inorganic coating layer at the end portion of the separator, and thus the binding force between the separator substrate and the inorganic coating layer is lower than the binding force between the electrode and the inorganic coating layer, a gap may be generated with ease between the separator substrate and the inorganic coating layer to cause an increase in the interfacial resistance at the gap portion as mentioned above, resulting in lithium plating (Ld).

On the contrary, in the electrode assembly according to the present disclosure, the concave pattern portion showing improved binding property is disposed to be overlapped with the inclined surface of the electrode, and thus lithium plating can be prevented. According to another embodiment of the present disclosure, the electrode may include a tab 320t extended from the current collector and protruding out from the negative electrode, and the separator and the electrode may be stacked in such a manner that the concave pattern portion of the separator may be overlapped with at least the tab, or the concave pattern portion may be overlapped with both the tab and the inclined surface. Meanwhile, according to an embodiment of the present disclosure, the electrode may be a positive electrode, a negative electrode, or both.

FIG. 4 is a schematic view illustrating the electrode assembly according to an embodiment of the present disclosure. Referring to FIG. 4, the part 100a where the concave pattern portion of the separator substrate in the separator is disposed may be disposed to be overlapped with the electrode tab and the inclined surface of the electrode active material layer. As used herein, the term `overlap' refers to appearing to overlap in a plan view, but does not necessarily mean that it is in physical contact.

According to the present disclosure, the positive electrode includes a positive electrode current collector, and a positive electrode active material layer disposed on at least one surface of the current collector and including a positive electrode active material, a conductive material and a binder resin. The positive electrode active material may include any one selected from: layered compounds, such as lithium manganese composite oxides (LiMn₂O₄, LiMnO₂, or the like), lithium cobalt oxide (LiCoO₂), lithium nickel oxide (LiNiO₂), or those compounds substituted with one or more transition metals; lithium manganese oxides, such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiVsOs, LiV₃O₄, V₂O₅ or Q₁₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; and Fe₂(MoO₄)₃; or a mixture of two or more of them.

According to the present disclosure, the negative electrode includes a negative electrode current collector, and a negative electrode active material layer disposed on at least one surface of the current collector and including a negative electrode active material, a conductive material and a binder resin. The negative electrode active material may include: carbon such as non-graphitizable carbon or graphite-based carbon; metal composite oxides, such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb, Ge; Me': Al, B, P, Si, elements of Group 1, 2 or 3 in the Periodic Table, halogen; 0 < x ≤ 1; 1 ≤ y ≤ 3; 1 ≤ z ≤ 8); lithium metal; lithium alloy; silicon-based alloy; tin-based alloy; metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and BizOs; conductive polymers, such as polyacetylene; Li-Co-Ni type materials; and titanium oxide; or a mixture of two or more of them.

According to an embodiment of the present disclosure, particular examples of the conductive material may include any one selected from the group consisting of graphite, carbon black, carbon fibers or metallic fibers, metal powder, conductive whisker, conductive metal oxides, activated carbon and polyphenylene derivatives, or a mixture of two or more such conductive material. More particularly, the conductive material may include any one selected from the group consisting of natural graphite, artificial graphite, Super-P, acetylene black, ketjen black, channel black, furnace black, lamp black, thermal black, denka black, aluminum powder, nickel powder, zinc oxide, potassium titanate and titanium oxide; or a mixture of two or more such conductive materials.

The current collector is not particularly limited, as long as it causes no chemical change in the corresponding battery and has high conductivity. Particular examples of the current collector may include stainless steel, copper, aluminum, nickel, titanium, baked carbon, aluminum or stainless steel surface-treated with carbon, nickel, titanium or silver, or the like.

The binder resin may be a polymer used conventionally for an electrode in the art. Non-limiting examples of the binder resin may include, but are not limited to: polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or two or more of them.

The electrode assembly prepared as described above may be introduced to a suitable casing, and an electrolyte may be injected thereto to obtain a battery.

According to the present disclosure, the electrolyte is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

In addition, the present disclosure provides a battery module which includes a battery including the electrode assembly as a unit cell, a battery pack including the battery module, and a device including the battery pack as an electric power source. Particular examples of the device include, but are not limited to: power tools driven by the power of an electric motor; electric cars, including electric vehicles (EVs), hybrid electric vehicles (HEVs), plug-in hybrid electric vehicles (PHEVs), or the like; electric two-wheeled vehicles, including E-bikes and E-scooters; electric golf carts; electric power storage systems; or the like.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### [Examples]

### Manufacture of Separator

A separator substrate made of polyethylene (thickness 9 µm, porosity 45%) was prepared, SUS mesh was disposed at the outer circumferential portions of two edges facing each other, and then pressurization was carried out by using a hot press to prepare a separator substrate having a concave pattern portion formed therein. The area of the concave pattern was 25% based on the area of the separator.

Then, 10 g of carboxymethyl cellulose (SG-102 available from GL Chem.) and 10 g of acrylic copolymer (CSB 130 available from Toyo) were introduced to and dispersed in 1,500 g of water. In addition, 980 g of Al₂O₃ (AES 11 available from Sumitomo) was introduced thereto and dispersed therein by using a ball mill to prepare a slurry for forming an inorganic coating layer. After that, the slurry was applied sequentially to both surfaces of the separator substate through gravure coating, followed by drying, to form inorganic coating layers. In each of Examples and Comparative Examples, the type of SUS mesh and pressure applied during the pressurization were controlled to adjust the roughness of the concave pattern portion and surface coverage (area of indentations) of the concave pattern portion, as shown in the following Table 1 and Table 2.

**[Table 1]**

| | Area of concave pattern portion based on separator substrate (%) | Surface coverage (%) | Roughness of concave pattern portion (Ra) | Peel strength (between separator substrate and inorganic coating layer) (gf/15mm) | Adhesion to electrode (between separator and electrode) (gf/25mm) | Resistance of separator (Ohm) |
|---|---|---|---|---|---|---|
| | | Area of indentations in concave pattern portion | | | | |
| Comp. Ex. 1 | 0 | 0 | 0.43 | 3 | 5 | 0.68 |
| Comp. Ex. 2 | 45 | 10 | 0.59 | 30 | 12 | 0.68 |
| Ex. 1 | 25 | 35 | 1.03 | 109 | 78 | 0.71 |
| Ex. 2 | 25 | 55 | 1.42 | 121 | 107 | 0.70 |
| Ex. 3 | 25 | 65 | 1.73 | 156 | 121 | 0.69 |
| Comp. Ex. 3 | 3 | 100 | 0.86 | 20 | 19 | 1.31 |

As can be seen from Table 1, when the coverage is 0% with no deformation of the separator substrate, the roughness and peel strength are low, resulting in a low adhesion between the electrode and the separator. In the case of Comparative Example 2, although the area of the concave pattern portion is set to a higher value due to a low coverage, the peel strength and adhesion to an electrode are low. On the contrary, in the case of Comparative Example 3, the area of the concave pattern is relatively small, but the electrochemical performance is degraded due to an increase in resistance at the corresponding region. Meanwhile, as the roughness becomes close to 70%, it can be seen that the roughness is increased, resulting in improvement of the peel strength and adhesion. However, when the separator is compressed through full-scale pressurization without any pattern, the roughness is rather decreased to cause degradation of the peel strength and adhesion and a decrease in porosity of the separator substrate, resulting in an increase in resistance of the separator after the formation of the inorganic coating layer.

**[Table 2]**

| | Surface coverage (%) Area of indentations in concave pattern portion | Roughness of concave pattern portion (Ra) | Peel strength (between separator substrate and inorganic coating layer) (gf/15mm) | Adhesion to electrode (between separator and electrode) (gf/25mm) | Resistance of separator (Ohm) | Dielectric breakdown voltage (V) |
|---|---|---|---|---|---|---|
| Comp. Ex. 4 | 40 | 0.69 | 22 | 16 | 0.72 | 1809 |
| Ex. 4 | 40 | 1.26 | 102 | 77 | 0.71 | 1592 |
| Ex. 5 | 40 | 1.99 | 126 | 107 | 0.69 | 1406 |
| Comp. Ex. 5 | 40 | 3.48 | 131 | 116 | 1.28 | 249 |

Meanwhile, in Examples 4 and 5 and Comparative Examples 4 and 5, the area (%) of the concave pattern portion in the separator substrate was commonly set to 20%, and the surface coverage was commonly set to 40%. As can be seen from Table 2, under the same coverage, a roughness of 1.0 or less after pressurization causes a significantly low level of peel strength and adhesion. On the contrary, an excessively high roughness causes blocking of the pores of the separator substrate, resulting in a significant increase in resistance of the separator after the formation of the inorganic coating layer and degradation of dielectric property caused by local deformation.

### Peel Strength

The separator sample obtained according to each of Examples and Comparative Examples was cut into a size of 80 mm (length) x 15 mm (width) to prepare two sheets of specimens. The two specimens were adhered to each other by using a double-sided tape and peeled from each other at an angle of 180° and a rate of 300 mm/min at 25°C, and the strength upon the peeling was measured.

### Adhesion to Electrode

A negative electrode and the separator obtained according to each of Examples and Comparative Examples were pressurized under the conditions of 60°C, 6.5 MPa and 1 sec to prepare a specimen for a test for determining adhesion to an electrode. The specimen was peeled at an angle of 180° and a rate of 300 mm/min at 25°C by using a UTM instrument available from Instron, and the strength upon the peeling was measured.

### Manufacture of Negative Electrode

The negative electrode used for the test for determining adhesion to an electrode was prepared as follows. First, 96.3 wt% of natural graphite (particle diameter 20 µm) as a negative electrode active material, 1.0 wt% of Super-P, 1.5 wt% of styrene butadiene rubber (SBR) and 1.2 wt% of carboxymethyl cellulose (CMC) were mixed to prepare a mixture. Next, the mixture was added to N-methyl-2-pyrrolidone (NMP) to prepare a negative electrode active material slurry. The resultant negative electrode active material slurry was applied to one surface of a copper current collector, and then pressurization was carried out to obtain a negative electrode.

### Determination of Resistance

The separator obtained according to each of Examples and Comparative Examples was inserted between stainless steel (SUS) sheets to obtain a coin cell. The resistance of each coin cell was determined through the result of electrochemical impedance spectroscopy by using 1470E cell test system and Frequency response analyzer 1255B available from Solaton at 25°C under the condition of a scan range of 100,000-10,000 Hz.

### Roughness

The average of roughness (Ra) values at 5 points was determined by acquiring Topo image by using Optical profiler NV-2700 available from Nanosystem and analyzing the image in WSI envelop mode.

Herein, the roughness, Ra, refers to a center line average roughness, which means the arithmetic average of the distance (absolute value) from the center line to the roughness curve (profile). Herein, the center line may be defined as follows. The center line refers to a straight line parallel to a mean line at a position where the upper and lower areas surrounded by a sectional curve are the same. Meanwhile, the mean line is a line having a geometric shape of a plane to be analyzed in the roughness curve, and refers to a straight line in which the sum of the squares of the deviations to the roughness sectional curve is minimized.

### Dielectric Breakdown Voltage

Thirty samples were prepared after deformation, the dielectric breakdown voltage values of the samples were measured, and the average thereof was used. Herein, the dielectric breakdown voltage was determined as follows. If the current flows at a level of 0.5 mA or more for 3 seconds or more, while boosting from 0 V to 100 V/s, it is determined that the dielectric breakdown occurs. The voltage value at this time point is recorded.

### [Description of Drawing Numerals]

| | | | |
|---|---|---|---|
| 100: | Separator | 110: | Inorganic coating layer |
| 122: | Indentations | 120: | Separator substrate |
| 100a: | Part formed by engagement of concave pattern of separator substrate with concave pattern of inorganic coating layer corresponding thereto | | |
| 100b: | Remaining part except portion 100a | | |
| 121, 120b: | Part maintaining flat surface in separator surface and having no concave pattern portion formed therein | | |
| 120a: | Concave pattern portion | | |
| 200: | Positive electrode | 210: | Positive electrode active material layer |
| 220: | Positive electrode current collector | 320t: | Negative electrode tab |
| 300: | Negative electrode | 310: | Negative electrode active material layer |
| 320: | Negative electrode current collector | 400: | Separator |

## Claims

1. A separator for an electrochemical device, comprising a separator substrate and an inorganic coating layer formed on the surface of the separator substrate,
wherein the separator substrate has a porous structure and comprises a polymer material,
the inorganic coating layer comprises inorganic particles and a binder material,
the surface of the separator substrate has a concave pattern portion having a predetermined width inwardly from the outer circumferential end in all regions or in at least a partial region of the outer circumferential portion, and
the concave pattern portion has indentations dented from the surface.

2. The separator for an electrochemical device according to claim 1, wherein the concave pattern portion has indentations dented inwardly from one surface of the separator substrate based on the thickness direction, and shows a surface roughness (Ra) of 0.8-3.2.

3. The separator for an electrochemical device according to claim 1, wherein the inorganic coating layer has a concave pattern corresponding to the concave pattern portion of the separator substrate at a position corresponding to the concave pattern portion of the separator substrate, and the concave pattern portion of the separator substrate and the concave pattern of the inorganic coating layer are engaged with each other.

4. The separator for an electrochemical device according to claim 3, which has a constant total thickness, and the concave pattern of the inorganic coating layer and the concave pattern of the separator substrate are engaged with each other at the boundary where the inorganic coating layer faces the separator substrate.

5. The separator for an electrochemical device according to claim 1, wherein the concave pattern portion has an area corresponding to 5-40% based on 100% of the area of the separator substrate.

6. The separator for an electrochemical device according to claim 1, wherein the concave pattern portion has indentations dented inwardly from one surface of the separator substrate based on the thickness direction, and the indentations have a plane area corresponding to 20-80% based on the total area of the concave pattern portion.

7. The separator for an electrochemical device according to claim 1, wherein the concave pattern portion shows an area corresponding to 5-40% based on 100% of the area of the separator substrate and has indentations dented inwardly from one surface of the separator substrate based on the thickness direction, and the indentations have a plane area corresponding to 20-80% based on the total area of the concave pattern portion.

8. The separator for an electrochemical device according to claim 1, wherein the separator substrate shows a plane area of the indentations corresponding to 20-80% based on the total area of the concave pattern portion, and the concave pattern portion has a surface roughness (Ra) of 0.8-3.2.

9. The separator for an electrochemical device according to claim 1, wherein the separator substrate is a porous sheet including a polyolefin.

10. The separator for an electrochemical device according to claim 1, wherein the inorganic particles include at least one selected from the group consisting of BaTiO₃, Pb(Zr,Ti)O₃ (PZT), Pb₁₋ₓLaₓZr_{1-y}Ti_{y}O₃ (PLZT, 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH) ₂, NiO, CaO, ZnO, ZrO₂, SiO₂, Y₂O₃, Al₂O₃, AlOOH, Al(OH) ₃, SiC and TiO₂.

11. An electrode assembly comprising a negative electrode, a separator and a positive electrode,
wherein the separator is the same as defined in claim 1,
the negative electrode comprises a current collector, an electrode active material layer formed on at least one surface of the current collector and a negative electrode tab extended from the current collector and protruding out from the negative electrode, and
the separator and the negative electrode are stacked in such a manner that the concave pattern portion of the separator is totally or at least partially overlapped with the negative electrode tab.

12. The electrode assembly according to claim 11, wherein the electrode active material layer of the negative electrode has an inclined surface at a total or at least a part of the end thereof, and the separator and the negative electrode are stacked in such a manner that the concave pattern portion of the separator is totally or at least partially overlapped with the inclined surface.
